Europäisches Patentamt

European Patent Office

Office européen des brevets

(19)

(11) Numéro de publication: **0 010 024**
**B1**

(12)

# FASCICULE DE BREVET EUROPEEN

(45) Date de publication du fascicule du brevet: **27.10.82**

(21) Numéro de dépôt: **79400659.3**

(22) Date de dépôt: **19.09.79**

(51) Int. Cl.³: **B 29 D 23/12,** B 29 D 3/02, F 16 L 47/00

(54) Procédé de fabrication de conduits en tissu imprégné de résine et conduits ainsi obtenus.

(30) Priorité: **22.09.78 FR 7827205**

(43) Date de publication de la demande:
**16.04.80 Bulletin 80/8**

(45) Mention de la délivrance du brevet:
**27.10.82 Bulletin 82/43**

(84) Etats contractants désignés:
**AT BE CH DE GB IT LU NL SE**

(56) Documents cités:
**US - A - 2 828 537**
**US - A - 3 896 206**

(73) Titulaire: **SOCIETE NATIONALE INDUSTRIELLE AEROSPATIALE Société dite:**
**37 Boulevard de Montmorency**
**F-75781 Paris Cedex 16 (FR)**

(72) Inventeur: **Lecourt, Guy Bernard Emile**
**3 Allée d'Anjou**
**F-91300 Massy (FR)**
Inventeur: **Portalier, Claude Louis Laurent**
**12 Allée Claude Monet**
**F-78160 Marly le Roi (FR)**

(74) Mandataire: **Barnay, André François et al,**
**Cabinet Barnay 80 rue Saint-Lazare**
**F-75009 Paris (FR)**

Courier Press, Leamington Spa, England.

EP 0 010 024 B1

## Procédé de fabrication de conduits en tissu imprégne de résine et conduits ainsi obtenus.

La présente invention a pour objet un procédé de fabrication de structures creuses de forme allongée, ouvertes, à leurs extrémités, que l'on désignera dans ce qui suit par "conduits", en tissu, imprégné de résine.

Il a déjà été proposé antérieurement de produire des corps creux, éléments tubulaires, tubes ou tuyaux en matière plastique renforcée suivant différents procédés. Parmi ceux-ci, on peut citer le procédé de moulage par centrifugation, consistant à placer le tissu sur la paroi intérieure d'un tube métallique qui tourne à grande vitesse et à projeter de la résine qui pénètre le tissu grâce à la force centrifuge, le durcissement de la résine étant obtenu ensuite par un chauffage du tube-moule. Le brevet français n° 1 347 394 applique ce procédé à la fabrication d'un poteau dans un moule incliné légèrement conique, tandis que le brevet français n° 2 197 711 décrit la réalisation, à partir du même principe, d'un tuyau conique en résine synthétique renforcée.

Un deuxième procédé, qui est le plus utilisé, consiste à enrouler sur une forme composée de plusieurs éléments démontables, tel que le propose le brevet français n° 1 169 030, ou sur un mandrin, un fil ou un ruban que l'on a fait passer dans un bain de résine pour imprégnation, comme indiqué dans le brevet français n° 1 302 197. Cette méthode demande une surveillance constante de l'imprégnation des fils et réclame en général leur mise en tension, dont la régularité est essentielle pour l'obtention d'un produit à haute résistance mécanique, par exemple.

Une autre méthode connue, généralement employée pour réaliser une structure creuse ouverte à ses deux extrémités, consiste à découper un grande nombre de flans de tissu imprégné de résine correspondant à la forme de la structure désirée. Ces flans de tissu sont ensuite groupés et empilés dans un ordre et en des positions bien déterminés sur un mandrin représentatif de la forme intérieure de ladite structure. L'ensemble est ensuite pressé dans un moule formé de deux demi-coquilles correspondant à la forme de la structure. Puis, la pièce est polymérisée à température ambiante ou en étuve pendant une durée et à une température bien déterminées en fonction de la nature du tissu et de la résine utilisés. Cette méthode de fabrication est d'une mise en oeuvre longue et par conséquent coûteuse. Elle occasionne par ailleurs des chutes relativement importantes de tissus qui sont souvent d'un prix élevé, s'agissant de tissus de fils de silice, ou de fils de carbone ou de graphite par exemple, utilisés en construction aéronautique.

On connaît par ailleurs (brevet américain n° 3 896 206) un procédé de fabrication d'arbres creux, suivant lequel on enroule sur un mandin plusieurs couches de résine époxy renforcée de fibres organiques, on place l'ensemble dans un moule en deux parties et on comprime à chaud l'enroulement par déplacement longitudinal du mandrin. Un tel procédé nécessite l'usage d'un mandrin conique, sur lequel doivent être enroulées de manière régulière et uniforme les fibres, toute irrégularité dans la répartition de celles-ci ne pouvant être rattrapée durant la compression, car celle-ci est purement radiale. De plus, il faut, suivant ce procédé, faire déborder la couche interne de fibres à une extrémité de l'enroulement pour l'ancrer sur le moule et immobiliser ainsi l'enroulement. Tout cela correspond à des opérations longues et délicates.

Les caractéristiques de tenue mécanique désirées en particulier dans le domaine aéronautique pour les conduits réalisés conformément aux différents procédés ci-dessus mentionés ne sont pas toujours atteintes, soit par mauvaise imprégnation de la structure textile avant bobinage, soit par tension ou répartition irrégulière lors du bobinage, soit par hétérogénéité de la pression de moulage dans un moule en demi-conquilles.

Afin de réduire les temps de main-d'ouvre, de diminuer les consommations de tissu imprégné et d'abaisser ainsi le prix de revient du produit obtenu d'une part, et d'accroître sa résistance mécanique d'autre part, la présente invention a pour objet un procédé de fabrication de conduits en tissu imprégné de résine et ayant une section conique, du genre dans lequel on enroule une bande de tissu imprégné en un bobineau, on le place dans l'ouverture d'un moule conique préchauffé, on exerce des poussées axiales sur le bobineau de part et d'autre du moule, on effectue la polymérisation du bobineau dans le moule et on démoule la pièce polymérisée. Selon l'invention, on sèche la bande de tissu imprégné de résine avant de l'enrouler sur elle-même en un cylindre creux ou bobineau dont les dimensions sont en rapport avec celles du conduit à réaliser; puis, après avoir mis en place le bobineau dans le moule, on introduit dans le bobineau la partie conique d'un fleuret préchauffé définissant la forme interne du conduit à réaliser, la surface interne du moule et la surface externe du fleuret présentant des parties coniques conjugées; on exerce alors les poussées axiales sur le bobineau par l'intermédiaire du fleuret et d'un manchon presseur introduit dans le moule du côté opposé au fleuret, en maintenant la température du fleuret et du moule à la température de préchauffage, tandis que le bobineau, sous le poussée du fleuret, se déploie en cône, ses spires se décalant mutuellement en prenant une configuration hélicoïdale; enfin, on effectue, après verrouillage du moule, une cuisson de polymérisation complète de la résine.

Il est avantageux d'appliquer successivement les poussées axiales exercées sur le bobineau pour assurer la compression et le moulage de la matière, la poussée sur le manchon étant appliquée après la poussées sur le fleuret. La poussée sur le fleuret est de préférence plus forte que la poussée sur la manchon et suffisante pour s'y opposer.

Il convient de préchauffer le bobineau à une temperature voisine de la température de ramollissement de la résine d'imprégnation, le fleuret et le moule pouvant être préchauffés à une température voisine du point de fusion de la résine d'imprégnation de manière à faciliter le glissement dans l'intérieur du moule de la préforme cylindrique que constitue le bobineau.

De préférence, le bobineau est introduit à l'extrémité supérieure du moule disposé verticalement.

On peut prévoir que le bobineau, en se déployant hélicoïdalement, vienne garnir un insert placé préalablement dans le moule, insert auquel s'unit l'extrémité de la partie conique du bobineau.

Le procédé selon l'invention, qui présente des avantages économiques dus à sa rapidité de mise en oeuvre et à la juste quantité de matière utilisée et des avantages mécaniques liés à l'accroissement de résistance qu'il procure, est applicable à la réalisation de conduits pouvant avoir des dimensions diverses et des formes très différentes, ayant au moins une partie conique ou cylindro-coniques (tuyères), et être constitués de tissus très variés tels que tissus en fibres de verre, de carbone, de graphite, de polyamide, imprégnés de résines diverses telles que résines polyester, époxy, polyimide, silicone, etc.

La description qui va suivre, en regard des dessins annexés à titre d'exemple non limitatif, permettra de bien comprendre comment la présente invention peut être mise en pratique.

La figure 1 représente en perspective un bobineau de tissu imprégné de résine.

La figure 2 représente le bobineau déployé en spires hélicoïdales au cours du moulage.

La figure 3 représente, en coupe longitudinale, un moule conformateur et un fleuret selon l'invention engagé dans le bobineau de la figure 1.

La figure 4 représente, de la même manière, la phase suivante correspondant à la figure 2.

La figure 5 représente, de la même manière, la phase de moulage du conduit avec application des poussées de part et d'autre du moule conformateur.

L'exemple de mise en oeuvre du procédé de fabrication d'un conduit selon la présente invention que l'on va décrire s'applique à la réalisation d'une tuyère d'éjection de missiles.

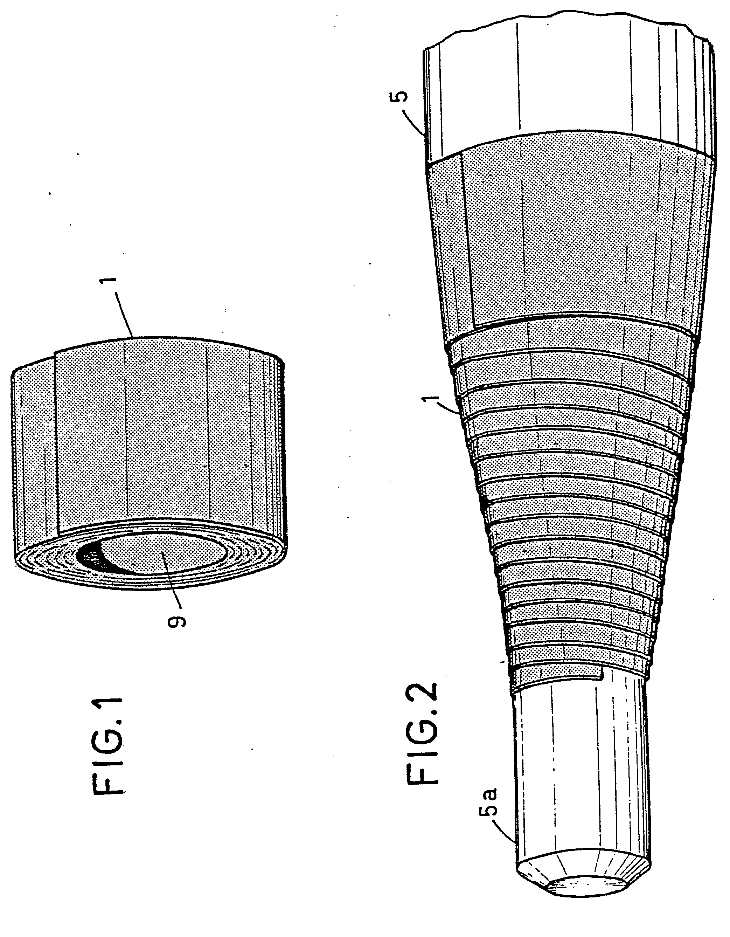

Ce procédé consiste tout d'abord à imprégner, d'une manière connue en soi, une grande feuille de tissu, par exemple du tissu de silice, d'une résine thermodurcissable telle que, par exemple, une résine phénolique, dissoute dans un solvant. Cette feuille imprégnée est ensuite séchée au moyen de la technique de chauffage et d'évaporation sous vide. Dans la feuille imprégnée ainsi séchée, on découpe des bandes qu'on enroule par bobinage pour former un cylindre creux 1, sans mandrin, désigné dans la suite du texte par "bobineau", tel qu'il apparaît à la figure 1. Les dimensions de ce bobineau sont évidemment en rapport avec la tuyère propulsive d'éjection des gaz de poudre ou des ergols d'un missile et/ou d'un engin tactique ou stratégique. En l'occurrence, une bande présente une longueur de 4 m environ et une largeur de l'ordre de 80 mm, en vue de la réalisation d'une tuyère avant une longueur d'environ 140 mm et un diamètre d'extrémité de divergent de 60 mm environ.

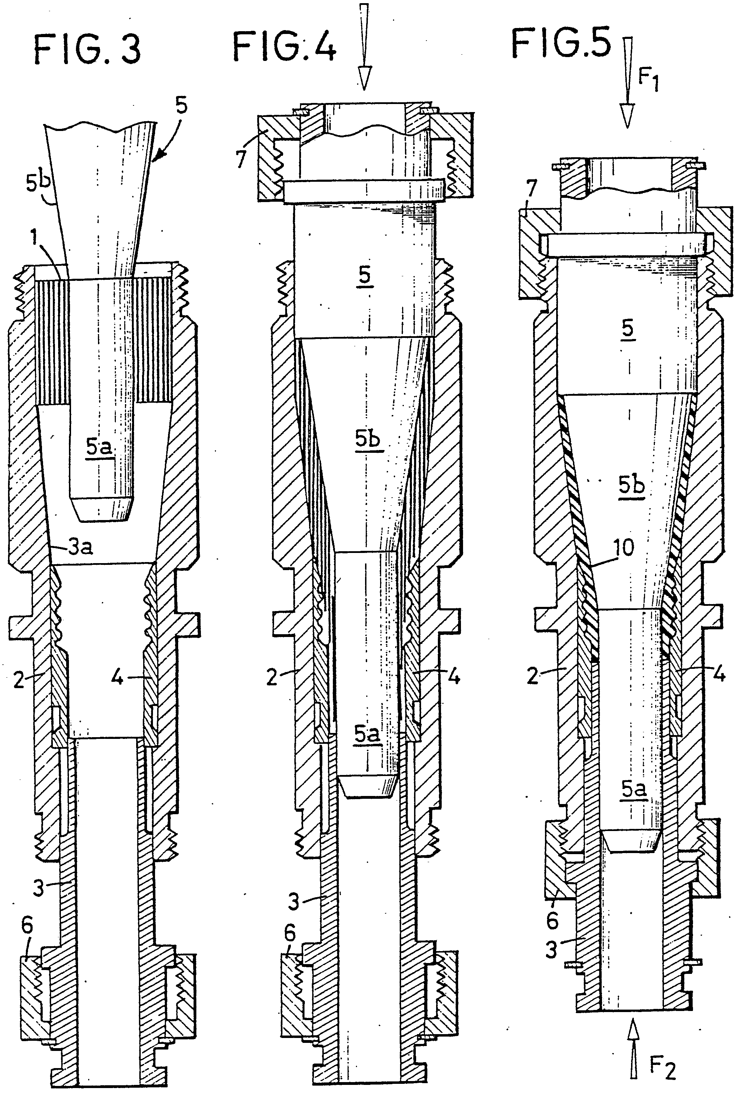

Le bobineau 1 de tissu imprégné de résine est, après séchage, préchauffé à une température voisine de le température de ramollissement de la résine d'imprégnation, qui est, dans l'exemple choisi, de l'ordre de 70° à 80°C pour une résine phénolique, ceci afin de conférer au tissu une certaine souplesse et au bobineau une certaine plasticité. Le bobineau assoupli est alors engagé dans l'alésage d'un moule conformateur 2 de révolution, à une des ses extrémités (figure 3). Ce moule est muni, à son autre extrémité, d'un manchon presseur 3 et est susceptible de comporter intérieurement un insert 4, en métal ou en toute aurtre matière, pouvant servir d'élément d'introduction d'efforts tel que élément de liaison, de fixation, de commande ou de frettage extérieur, sans aucune limitation, sur la tuyère achevée.

La moule est alors assujetti en position verticale à une machine à mouler par tout moyen approprié. On introduit ensuite dans le trou central 9 du bobineau 1 la partie cylindrique 5a d'un fleuret conique 5 représentatif de la forme intérieure de la tuyère à réaliser. Ce fleuret 5 ainsi que le moule conformateur 2 sont préchauffés à une température voisine du point de fusion de la résine d'imprégnation du tissu, température de fusion qui est de l'ordre de 120°C pour la résine phénolique utilisée dans l'exemple choisi. Cette température et le poids du fleuret facilitent le glissement à l'intérieur du moule des spires de la préforme cylindrique que constitue le bobineau 1, lequel prend sensiblement la forme géométrique du conduit désiré (figure 4), principalement définie par les parties coniques 3a et 5b du moule 3 et du fleuret 5, les spires internes du bobineau venant se disposer sous l'insert annulaire 4 préalablement placé dans le moule 2. Au fur et à mesure de ce glissement, la température de préchauffage du moule et du fleuret permet aux parois du bobineau d'adhérer alors fortement aux parois du moule et du fleuret, cette adhésivité étant accentuée et achevée au cours de l'opération suivante.

Des vérins, non représentés, disposés en bout de part et d'autre de l'ensemble du moule conformateur, exercent, en agissant respectivement sur le fleuret 5 et sur le manchon 3 (figure 5), successivement des poussées $F_1$ et $F_2$, de telle manière que le poussée $F_1$ soit suffisante

pour s'opposer à la poussée $F_2$ et s'exerce dans le but de positionner précisément le préforme dans le moule, le poussée $F_2$ s'exerçant dans le but de provoquer la compression de la matière et le moulage. La poussée $F_1$ est supérieure à la poussée $F_2$ et cette dernière est appliquée après la poussée $F_1$. Pendant cette opération de compression, on maintient à 120°C la température de préchauffage du moule et du fleuret de manière à ne pas commencer prématurément la polymérisation de la matière. En fin de compression, on vient verrouiller l'ensemble du moule conformateur à l'aide d'écrous 6 et 7 portés respectivement par le manchon 3 et le fleuret 5, qui viennent se visser sur des parties filetées ménagées sur les parois extérieures d'extrémités du moule 2.

L'ensemble du moule conformateur verrouillé est alors enlevé de la machine à mouler pour engager le conduit moulé 10 qu'il contient dans un cycle de polymérisation complète. Celle-ci se déroule selon un cycle approprié à la résine utilisée. Elle est généralement réalisée en étuve, à une température de 175°C, environ pendant 2 à 3 heures, si l'on a employé une résine phénolique. Avec une résine silicone, cette polymérisation se ferait à une température de l'ordre de 80°C pendant 8 heures. Certaines résines, telles que les résines époxy et polyester par exemple, peuvent ne pas nécessiter un passage en étuve; une polymérisation à température ambiante peut s'avérer suffisante.

Après polymérisation, on procède au démoulage du conduit cylindro-conique ainsi réalisé qui ne nécessite aucune autre opération d'usinage. Il constitue, avec l'insert 4 dont il est maintenant solidaire, une tuyère utilisable par exemple sur un missile.

**Revendications**

1. Procédé de fabrication de conduits en tissu imprégné de résine et ayant une section conique, dans lequel on enroule une bande de tissu imprégné en un bobineau 1, on place celui-ci dans l'ouverture d'un moule conique 2 préchauffé, on exerce des poussées axiales sur le bobineau 1 de part et d'autre du moule 2, on effectue la polymérisation du bobineau 1 dans le moule 2 et on démoule la pièce polymérisée, caractérisé par le fait que l'on sèche la bande de tissu imprégné de résine avant de l'enrouler sur elle-même en un cylindre creux ou bobineau 1 dont les dimensions sont en rapport avec celles du conduit à réaliser, que, après avoir mis en place le bobineau 1 dans le moule 2, on introduit dans le bobineau 1 la partie conique 5b d'un fleuret 5 préchauffé définissant la forme interne du conduit à réaliser, la surface interne du moule 2 et la surface externe du fleuret 5 présentant des parties coniques conjuguées, qu'on exerce les poussées axiales sur le bobineau 1 par l'intermédiaire du fleuret 5 et d'un manchon presseur 3 introduit dans le moule 2 du côté opposé au fleuret 5, en maintenant la température du fleuret 5 et du moule 2 à la température de préchauffage, tandis que le bobineau 1, sous la poussée de fleuret 5, se déploie en cône, ses spires se décalant mutuellement en prenant une configuration hélicoïdale, et qu'on effectue, après verrouillage du moule 2, une cuisson de polymérisation complète de la résine.

2. Procédé selon la revendication 1, caractérisé par le fait que l'on applique successivement les poussées axiales, la poussée $F_2$ sur le manchon presseur 3 étant appliquée après la poussée $F_1$ sur le fleuret 5.

3. Procédé selon la revendication 1 ou 2, caractérisé par le fait que la poussée $F_1$ sur le fleuret 5 est plus forte que la poussée $F_2$ sur le manchon presseur 3 et suffisante pour s'y opposer.

4. Procédé selon l'une quelconque des revendications 1 à 3, caractérisé par le fait que le bobineau 1 est préchauffé à une température voisine de la température de ramollissement de résine d'imprégnation.

5. Procédé selon l'une quelconque des revendications 1 à 4, caractérisé par le fait que le fleuret et le moule 2 sont préchauffés à une température voisine du point de fusion de la résine d'imprégnation.

6. Procédé selon l'une quelconque des revendications 1 à 5, caractérisé par le fait que le bobineau 1 est introduit à l'extrémité supérieure du moule 2 disposé verticalement.

7. Procédé selon l'une quelconque des revendications 1 à 6, caractérisé par le fait que le bobineau 1, se déployant hélicoïdalement, vient garnir un insert 4 placé préalablement dans le moule, insert auquel s'unit le bobineau conique.

8. Conduit obtenu par la mise en oeuvre du procédé selon l'une quelconque des revendications 1 à 7.

9. Tuyère obtenue par la mise en oeuvre du procédé selon l'une quelconque des revendications 1 à 7.

**Claims**

1. Process of manufacture of conduits of material impregnated with a resin having a conical section, in which a band of impregnated material is wound into a reel (1), this is placed in the cavity of a preheated conical mould (2), axial forces are exerted on the reel (1) by the components of the mould (2), polymerisation of the reel (1) is effected in the mould (2) and the polymerised article is then removed from the mould, characterised in that the resin-impregnated band of material is dried before being rolled into a hollow cylinder or reel (1) having dimensions which are in the ratio of those of the conduit to be manufactured, after locating the reel (1) in the mould (2), the conical part (5b) of a preheated mandrel (5) defining the internal shape of the conduit to be manufactured is introduced into the reel (1), the internal surface of the mould (2) and the external surface of the mandrel (5) having conjugate conical portions, axial forces are exerted on the reel (1) by means of the mandrel (5) and a presser sleeve (3) introduced into the mould (2) at the other end from the mandrel (5), while maintaining the temperature of the mandrel (5) and of the mould (2) at the preheating temperature, while the reel (1) under the pressure of the mandrel (5) forms a cone, the turns of which are displaced relatively so as to have a helicoidal configuration, and after closure of the mould (2) curing for complete polymerisation of the resin is effected.

2. Process according to claim 1, characterised in that the axial forces are applied successively, the force ($F_2$) on the presser sleeve (3) being applied after the force ($F_1$) on the mandrel (5).

3. Process according to claim 1 or 2, characterised in that the force ($F_1$) on the mandrel (5) is greater than the force ($F_2$) on the presser sleeve (3) and is sufficient to oppose it.

4. Process according to any of claims 1 to 3, characterised in that the reel (1) is preheated to temperature in the vicinity of the softening temperature of the impregnation resin.

5. Process according to any of claims 1 to 4, characterised in that the mandrel (5) and the mould (2) are preheated to a temperature in the vicinity of the point of fusion of the impregnation resin.

6. Process according to any of claims 1 to 5, characterised in that the reel (1) is introduced into the upper extremity of the mould (2) disposed vertically.

7. Process according to any of claims 1 to 6, characterised in that the helicoidally arranged reel (1) serves to line an insert (4) previously located in the mould, to which insert the conical reel becomes joined.

8. Conduit obtained by carrying out the process according to any of claims 1 to 7.

9. Pipe obtained by carrying out the process according to any of claims 1 to 7.

## Patentansprüche

1. Verfahren zum Herstellen von harzgetränkten Geweberohren mit einem konischen Abschnitt durch Aufwickeln eines imprägnierten Gewebebandes zu einem Wickel (1), Einsetzen des Wickels in die Öffnung einer vorerhitzten konischen Form (2), Ausüben von Axialkräften auf den Wickel von den beiden Seiten der Form her, Polymerisation des Wickels (1) in der Form (2) und Entformen des polymerisierten Formteils, dadurch gekennzeichnet, daß das harzgetränkte Gewebeband vor dem Aufwickeln zu einem Hohlzylinder oder Wickel (1), dessen Abmessungen denen des herzustellenden Rohrs angepaßt sind, getrocknet wird, daß nach dem Einsetzen des Wickels (1) in die Form (2) in den Wickel (1) der konische Teil (5b) eines vorerhitzten Bohrers (5) eingeführt wird, der die Innenform des herzustellenden Rohrs definiert, wobei die Innenseite der Form (2) und die Außenseite des Bohrers (5) einander angepaßte konische Abschnitte aufweisen, daß auf den Wickel (1) Axialkräfte mit Hilfe des Bohrers (5) und einer Druckhülse (3) ausgeübt werden, die in die Form (2) von der dem Bohrer (5) abgewandten Seite aus eingeführt wird, wobei die Temperatur des Bohrers (5) und der Form (2) auf der Vorerhitzungstemperatur gehalten wird, während der Wickel (1) unter der Krafteinwirkung des Bohrers (5) zu einem Kegel aufgeweitet wird und die Windungen des Wickels sich derart gegeneinander verschieben, daß sie die Gestalt einer Schraubenwendel annehmen, und daß nach dem Schleißen der Form (2) eine vollständige Polymerisationshärtung des Harzes durchgeführt wird.

2. Verfahren nach Anspruch 1, dadurch gekennzeichnet, daß der Angriff der Axialkräfte nacheinander erfolgt und daß die Kraftausübung ($F_2$) auf die Druckhülse (3) nach der Kraftausübung ($F_1$) auf den Bohrer (5) vorgenommen wird.

3. Verfahren nach Anspruch 1 oder 2, dadurch gekennzeichnet, daß die Kraftausübung ($F_1$) auf den Bohrer (5) stärker ist als die Kraftausübung ($F_2$) auf die Druckhülse (3) und ausreichend hoch, um ihr Widerstand zu leisten.

4. Verfahren nach einem der Ansprüche 1 bis 3, dadurch gekennzeichnet, daß der Wickel (1) auf eine nahe dem Erweichungspunkt des Tränkharzes liegende Temperatur vorerhitzt wird.

5. Verfahren nach einem der Ansprüche 1 bis 4, dadurch gekennzeichnet, daß der Bohrer (5) und die Form (2) auf eine nahe dem Schmelzpunkt der Tränkharzes leigende Temperatur vorerhitzt werden.

6. Verfahren nach einem der Ansprüche 1 bis 5, dadurch gekennzeichnet, daß der Wickel (1) am oberen Ende der senkrecht gestellten Form (2) eingesetzt wird.

7. Verfahren nach einem der Ansprüche 1 bis 6, dadurch gekennzeichnet, daß der Wickel (1) sich schraubenlinienförmig ausbreitet und ein zuvor in die Form eingesetztes Einsatzteil (4) ausfüllt, das sich mit dem konischen Wickel verbindet.

8. Rohr, hergestellt durch Ausüben des Verfahrens nach einem der Ansprüche 1 bis 7.

9. Düse, hergestellt durch Ausüben des Verfahrens nach einem der Ansprüche 1 bis 7.

FIG.1

9

1

FIG.2

5

5a

1

# FIG.3

# FIG.4

# FIG.5